# EUROPEAN PATENT APPLICATION

(11) **EP 3 848 641 A1**
(43) Date of publication of application: **14.07.2021**
(21) Application number: 21150260.4
(22) Date of filing: 05.01.2021
(51) Int. Cl.: F24D 3/00, F24D 10/00, F24D 19/10

(54) **METHOD FOR BALANCING A HEATER SYSTEM AND A HEATER SYSTEM**

(30) Priority: 10.01.2020 FI 20205021
(71) Applicant: Sandstedt, Risto, 00570 Helsinki (FI)
(72) Inventor: Sandstedt, Risto, 00570 Helsinki (FI)
(74) Representative: Laine IP Oy

(57) **Abstract**

The present invention relates to a novel method and radiator system for balancing a radiator system comprising at least two heat-dissipating apparatuses (7, 8, 17), wherein the connection to the liquid main feed line (1) and the main return line (2) is carried out so that the inlet conduit (13) of the first heat-dissipating apparatus (7) is connected to the main feed line (1) as the first one in flow direction, and the inlet conduit (9) of the second heat-dissipating apparatus (8) is connected to the main feed line (1) as the second one in flow direction, and the inlet conduit (21) of each subsequent heat-dissipating apparatus (17) is connected in a corresponding way to the main feed line (1) sequentially in flow direction. The return conduit (16) of the heat-dissipating apparatus (7) first connected to the main feed line is connected to the main return line (2) as the first one in the flow direction of the main return line (2) and the return conduit (20) of the second heat-dissipating apparatus (8) is connected to the main return line (2) as the second one in the flow direction of the main return line (2) and each of the heat-dissipating apparatuses from first (7) to the last (17) heat-dissipating apparatus is connected in a corresponding way to the main return line (2) by its return conduit (16, 20, 22) sequentially in the flow direction thereof.

## Description

### TECHNICAL FIELD

The present invention relates to balancing a system comprising radiators located in the rooms of a building comprising a number of rooms. The invention especially relates to balancing a radiator system in a residential building. In more detail, the invention relates to a method according to the preamble of the independent claims for balancing a radiator system and a radiator system suitable for carrying out the method.

### BACKGROUND

Systems comprising in a number of rooms and heat sources located therein, such as radiators, underfloor heating pipes and the like, must be adjusted to operate so that heat distribution can be made to function both when the ambient temperature changes and also regardless of the settings of the thermostats in the various rooms.

The aim of the base adjustment is to provide into the building as unform heat conditions as possible. Often the radiators of an unadjusted building distribute heat unevenly into the rooms, whereby the room temperatures can vary by many degrees in the different parts of the system. An adjusted system, on the other hand, provides even room temperatures in the whole network. After a successful base adjustment living comfort is increased and heating costs are reduced. In buildings without a base adjustment, average temperature variations are estimated as being in excess of 3°C, 'but temperature differences exceeding 6°C are not unusual. A base adjustment of the heating system has a considerable effect on the consumption of heating energy, especially in buildings with many apartments. Base adjustment can reduce the energy consumption of the building. The beginning of the heating network of an unadjusted building has the highest room temperatures, because in a temperature control system warm water always tries to find the easiest flow route. The room temperatures of the most difficult parts of the network are too low, because due to the line adjustment and radiator thermostats being unadjusted the radiators at the beginning receive the largest portion of the flow and thus also of the heat. Thus, in an adjusted building energy is wasted, because the apartment in the most difficult part must have reasonable temperature conditions, whereby the apartments closest to the heat distribution centre are many degrees too warm.

The above mentioned problem is caused by the fact that in a liquid-circulation heating system the flow directions of the feed pipe and the return pipe are parallel, i.e. the radiator, underfloor heating pipe system or other heat-radiating apparatus located first in the flow direction is connected first to the feed pipeline and its return conduit is similarly connected to the return line as the first one. Thus the heat-radiating apparatuses at the beginning take the largest part of the flow. For this same reason the heating systems are not well suited for cooling by means of, for example, district cooling.

Radiator systems and their balancing are discussed in the following publication: HESSO, J. "Vesikiertoisen lämmitysjärjestelmän ongelmat ja optimointi" (The problems and optimizing of a water circulation heating system) and patent publications GB 2527013, CN 108385873 and GB 2544063.

### SUMMARY

The purpose of the invention is to provide an improved method and radiator system. by means of which the base adjustment of the system can be accomplished more easily.

The purpose of some embodiments of the invention is to provide a system that can also be used for cooling.

The invention is characterized by what is disclosed in the characterizing part of the independent claim.

According to the first embodiment of the invention, the connection of at least two heat-radiating apparatuses to the main liquid feed line and the main return line is accomplished so that the inlet conduit of the first heat-transferring subsystem is connected to the main feed line as the first one in flow direction and the inlet conduit of the second heat-transferring subsystem is connected to the main feed line as the second one in flow direction, and each of the following subsystems are in a corresponding way sequentially connected to the main feed line flow direction thereof. The return conduit of the heat-transferring subsystem first connected to the main feed line is connected to the main return line as the first one in the flow direction of the main return line and the return conduit of the second to last heat-transferring subsystem is connected to the main return line as the second one in the flow direction of the main return line, and each of the heat-transferring subsystems from last to first heat-transferring subsystem is connected in a corresponding way to the main return line by its return conduit sequentially in the flow direction thereof. The cross-sections of the main feed line and the main return line change so that at the connection point of the first subsystem the cross-section of the main feed line corresponds to the cross-section required by the feed mass flow of the whole system, and at the connection point of the last subsystem to the cross-section required by the last subsystem, and the cress-section of the main feed line is reduced by the cross-section required by the mass flow of each subsystem after the connection point. The cross-section of the main return line changes so that at the connection point of the first subsystem the cross-section of the main return line corresponds to the cross-section dimensioned according to the return mass flow from the subsystem, and the cross-section increases at each subsystem connected to the main return line according to the mass flow of the return flow from the subsystem, until the cross-section of the main return line corresponds to the return flow of the whole system.

According to another embodiment of the invention the flow rates of the feed line and the return line are adjusted so that the temperature of the space heated by the heat-dissipating apparatus can be set to the desired set value by adjusting the mass flow of the liquid flowing through each heat-radiating apparatus.

According to a third embodiment of the invention the circulating liquid is water.

According to a fourth embodiment of the invention the heat-dissipating apparatus is at least one apparatus from the group of: radiator, convection radiator, fan-assisted radiator or underfloor heating circuit.

According to a fifth embodiment of the invention the feed line and return line of the system are connected to a district heating heat exchanger.

According to a sixth embodiment of the invention the system comprises a shut-off valve for disconnecting the system from the district heating heat exchanger and for connecting the system to the liquid circulation of a cooling apparatus.

According to a seventh embodiment of the invention the cooling apparatus is a cooling heat pump, such as an air-source heat pump or an geothermal heat pump.

According to an eighth embodiment of the invention the cooling apparatus is a district cooling heat exchanger.

According to a ninth embodiment of the invention the cooling heat pump is connected to a heat accumulator for recovering heat.

According to a tenth embodiment of the invention the heat accumulator is connected to at least one apparatus from the group: solar accumulator, air-source heat pump, geothermal heat pump, water-source heat pump.

According to an eleventh embodiment of the invention the heat accumulator is connected to the hot water heat exchanger of the building.

According to a twelfth embodiment of the invention the inlet or return conduit of at least one heat-dissipating apparatus comprises a shut-off valve for disconnecting the heat-dissipating apparatus from the liquid feed line.

### BRIEF DESCRIPTION OF DRAWINGS

In the following, some embodiments of the invention are disclosed in more detail by means of reference to the appended drawings, in which:
FIGURE 1 is a schematic illustration of the operating principle of a system according to one embodiment, and
FIGURE 2 is another schematic illustration of the operating principle of the invention.

### EMBODIMENTS

### DEFINITIONS

In the following a heat-dissipating apparatus, called hereinafter "radiator", is used as the heat-transferring subsystem. In this context, however, the term includes, without being limited thereto, all heat-radiating apparatuses with liquid circulation, such as heat-radiating radiators, convection radiators, fan-assisted radiators and floor-heating pipe systems and the like, also when connected so as function as cooling devices.

In the following, water is mentioned as an example of heat transfer medium. In the following disclosure, another liquid heat transfer medium can be used instead of water, such as glycol, glycol mixture, other water/alcohol mixture or heat transfer oil.

The term first radiator means the radiator connected to the main feed line as the first one in the flow direction of the water and the term last radiator means the last radiator connected to the main feed line.

Cross-section means the flow cross-section of a pipe or the like component.

At present, the heat-dissipating apparatuses located at the beginning take the largest part of the flow. Adjustment of the system is difficult, and adding and removing radiators in the system requires readjusting the system. The system is also difficult to arrange for cooling, and it is not easy to provide a temperature setting that differs a lot from the form the general setting for individual rooms. In this invention the radiators connected in the flow direction of the feed line from the first to the last +are connected to the main feed line so that the radiator connected as the last one to the main feedline is connected to the main return line as the first one and the other radiators are connected to the main return line sequentially in a corresponding way. The flow direction of water in the main feed line is from the direction of the first radiator to the last one, and in the main return line the direction is the same. The cross-sections of the main feed line and the main return line are arranged so that the cross-section of the main feed line is reduced from the connection point of the first radiator towards the connection point of the last radiator and the cross-section of the main return line and increases from the connection point of the first radiator connected thereto towards the connection point of the last connected radiator and combined cross-section of the main return line is the same at the location of each radiator connected at the same point of the main feed line and the main return line.

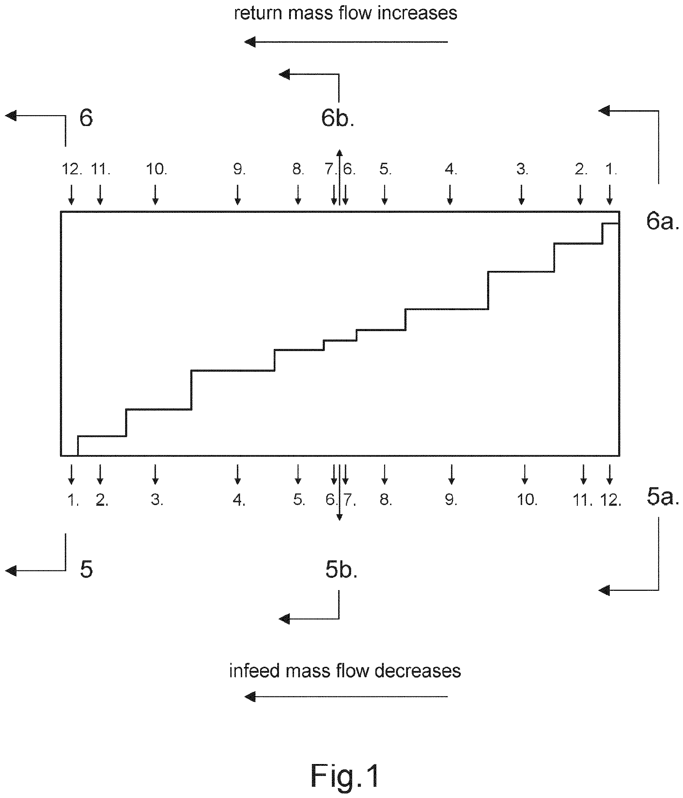

FIGURE 1 is a schematic illustration of another embodiment according to the invention. It shows the relative flow rates of a system comprising twelve radiators in the feed line and return line of a radiator system. Such a system could, for example, be used in semi-detached houses comprising two apartments. In FIGURE 1, the flow rate coming to the return line is on the left side and the flow rate taken from the feed line is on the right side. At the first radiator 1 the flow taken from the feed line is small, as the step at this point shows. Correspondingly, in the return line he flow rate is big. The combined flow rate of the feed line and the return line is 100% of the total flow rate. In the next point, at radiator 2, the flow rate taken from the feed line is the sum of the flow rates of radiators 1 and 2, and correspondingly the total flow rate fed into the return line is at the same point the sum of the flow rates coming to the return line from eleven radiators. Thus, when the low rate taken from the feed line increases at each radiator, the flow rate at the return line is correspondingly reduced. The total sum of the flows of the return line and the feed line is 100% at each point.

The situation shown in FIGURE 1 is accomplished by connecting the radiators to the feedline sequentially in relation to the flow direction from the first one to the last one. The connection to the return line is accomplished sequentially in the direction of the increasing flow cross-section in the flow direction. The allows equalizing the flow rate taken by each radiator on different points of the system, and the radiators at the beginning of the system do not take the largest part of the system as in earlier systems. Neither does the base adjustment change, if one or more radiators are disconnected from the system by means of e.g. shut-off valves. The combined sum of flow rates remains the same at each radiator.

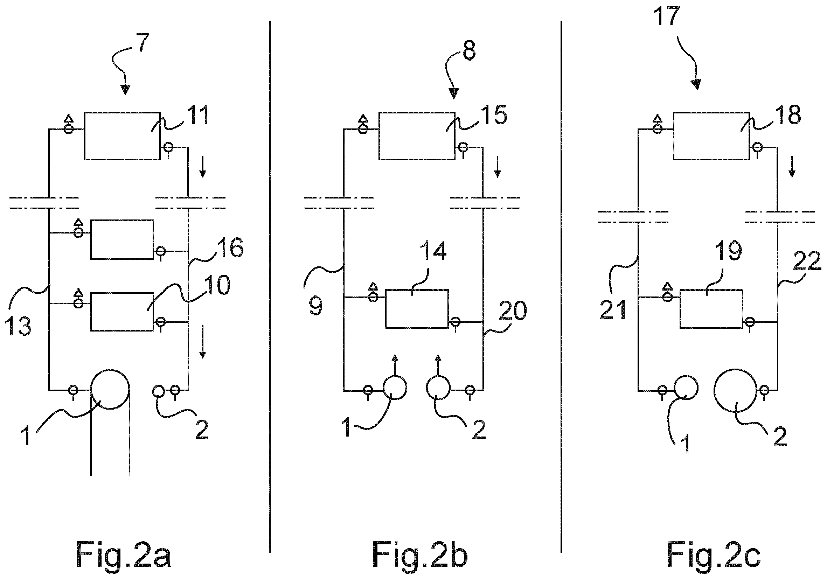

Figure 2 shows one example of carrying out the arrangement according to figure 1. It shows a main feed line 1 and a main return line 2. Three heat-dissipating or cooling subsystems 7, 8, 17 are connected to the main feed line 1. Each of the subsystems 7, 8, 17 comprises radiators 10, 11, 14, 15, 18, 19. The first subsystem 7 is connected to the main feed line 1 by means of the first subsystem feed line 13 and to the main return line 2 by means of the first subsystem return line 16. The second subsystem 8 is correspondingly connected to the main feed line 1 by means of the second subsystem feed line 9 and to the main return line 2 by means of the second subsystem return line 20. The third subsystem 17 is connected to its main feed line and main return line 1, 2. correspondingly, by means of its feed and return lines 21, 22.

As can be seen in FIGURES 2a, 2b and 2c, the cross-sections of the pipes of the main feed line 1 and the main return line 2 change along the length of each main line in the flow direction. For clarity, this system only comprises three subsystems 7, 8, 17. At point 5a the main feed line 1 has a certain (first) cross-section, defined by the total mass flow of liquid required by the system. The feed line 13 of the first subsystem 7 is connected to the main feed line 1 within the area of the first cross-section 5a. The cross-section of the main feed line 1 is reduced in the flow direction of the main feedline to become the second cross-section at point 5b. This cross-section is defined by the mass flow required by the second subsystem 8. The reduction of the cross-section continues according to the subsystems to be joined, in FIGURE 2 until the third cross-section 5c. In figure 2 the change of cross-section is for clarity shown as steps, but it is carried out in a flow-technically preferred way according to normal pipeline construction principles. The cross-section of the main feed line 1 always decreases according to the volume flow taken therefrom. The cross-section of the main return line 2 changes accordingly. Within the area of the first cross-section 6a the cross-section is smaller than within the second area 6b and the third area 6c. The dimensioning of the first cross-section 6a of the main return line 2 is defined by the mass flow from the subsystem 7 through the return line 16 of the first subsystem, and dimensioning of the second cross-section is defined by the sum of mass flows from the return lines 16, 14 of first and second subsystems. If there are more subsystems, they are sequentially connected to the main feed line 1 and main return line 2 in a corresponding way.

The cross-section of the main feedline 1 changes so that at the beginning of the line there is a first cross-section, dimensioned according to the total flow requirement of the system. When the mass flow required by the first subsystem is taken from the main feed line, the cross-section thereof decreases accordingly to correspond with the mass flow needs of the subsystems located subsequently in the system. The cross-section of the beginning of the main feed line is thus arranged to suit the total flow requirement of the system, and the final cross-section at the end of the line is arranged to suit the requirement of the last subsystem.

The cross-section of the main return line changes accordingly, but so that its initial cross-section is defined by the mass flow of the first subsystem. The next cross-section is defined by the sum of the return mass flows of the first and second subsystems and the final cross-section of the main return line is the total sum of return mass flows, which is the same as the cross-section of the main feed line at its beginning. Thus, at the connection point of each subsystem the sum of the flow area of the main feed line and the main return line is the same.

The purpose of the dimensioning of the main feed line and the main return line is to provide into them mass flows the sum of which is always the same at the location of each subsystem connected to the main lines. Usually this means dimensioning the cross-sections of the pipelines. It is of course obvious that the mass flows can also be controlled in other ways, according to the usual design principles.

When carrying out the base adjustment the flow rates of the feed line and the return line are adjusted so that the amount of liquid flowing through each heat-dissipating apparatus is set so that independent adjustment the liquid mass flow through each heat-dissipating apparatus allows setting the temperature of the space heated by the apparatus to the desired setting value. This adjustment is made by means of e.g. thermostat-controlled valves or remote-controlled valves.

Each heat-dissipating apparatus or each subsystem can, in principle, be any heat-dissipating apparatus with liquid circulation, such as a radiator, convection radiator, fan-assisted radiator or a underfloor-heating circuit or a subsystem formed by these. The same apparatuses can be used for cooling by connecting to the feed line a unit cooling the liquid circulating therein or otherwise feeding cold liquid into the line. At least some embodiments of the invention are well suited for buildings using district heating. In this case the feed line and return line of the system are connected to a district heating heat exchanger. The system can in a corresponding way be connected to district cooling as well.

The system can also comprise a separate cooling apparatus being controlled by the building itself. In this case the system comprises a shut-off valve for disconnecting the system from the district heating heat exchanger and connecting it to the liquid circulation of a cooling apparatus. The cooling apparatus can be, for example, a cooling heat pump, such as an air-source heat pump, water-source heat pump or a geothermal heat pump. When using district cooling the cooling apparatus is the heat exchanger of district cooling. The separate cooling heat pump of the building can be connected to a heat accumulator for recovering heat. Other heat recovery apparatuses can also be connected to the heat accumulator, such as an apparatus or apparatuses from the group of; solar accumulator, air-source heat pump, geothermal heat pump, water-source heat pump. The heat energy stored in the heat accumulator can be used for, e.g. heating warm water, whereby the heat accumulator is connected to the hot water heat exchanger of the building.

The features of the invention include scalability and variability of the system. Radiators or other heat-dissipating apparatuses can be connected to the system or disconnected therefrom. For disconnecting a radiator or the like the inlet or return conduit of at least one heat-dissipating apparatus comprises a shut-off valve for disconnecting this heat-dissipating apparatus from the liquid feed line. This provides an arrangement wherein e.g. during cooling only a portion of the spaces is cooled, while other radiators are disconnected from the circulation. The heating of a space can correspondingly be totally switched off, if heating is temporarily not needed in this space.

In addition to those mentioned above, the heat source of the system can be other heat exchanger, a boiler, such as a combustion or electric boiler or a waste heat source heat exchanger.

### INDUSTRIAL APPLICABILITY

This invention is suitable for forming and adjusting the heating systems of buildings.

## Claims

1. Method for balancing a system comprising at least two heat-transferring apparatuses, **characterized in that**
- the connection to the liquid main feed line (1) and the return line (2) is carried out so that the inlet conduit (13) of the first heat-transferring subsystem (7) is connected to the main feed line (1) as the first one in flow direction, and the inlet conduit (9) of the second transferring subsystem (8) is connected to the main feed line (1) as the second one in flow direction, and the inlet conduit (21) of each subsequent heat transferring subsystem (17) is connected in a corresponding way to the main feed line (1) sequentially in flow direction,
- the return conduit (16) of the heat-transferring subsystem (7) first connected to the main feed line (1) is connected to the main return line (2) as the first one in the flow direction of the main return line (2) and the return conduit (20) of the second heat-transferring subsystem (8) is connected to the main return line (2) as the second one in the flow direction of the main return line (2) and each of the heat-transferring subsystems from first (7) to the last (17) heat-transferring subsystem is connected in a corresponding way to the main return line (2) by its return conduit (16, 20, 22) sequentially in the flow direction thereof, and
- the mass flows of the main feed line (1) and the main return line (2) are dimensioned so that at the connection point of each heat-transferring subsystem (7, 8, 17) connected thereto the combined mass flows of the main feed line (1) and the main return line (2) are equal.

2. A method according to claim 1, **characterized in that** the cross-sections of the main feed line (1) and the main return line (2) change so that at the connection point of the first subsystem (7) the cross-section of the main feed line (1) corresponds to the cross-section required by the feed mass flow of the whole system and at the connection point of the last subsystem (17) the cross-section corresponds to that required by the last subsystem (17), and the cross-section of the main feed line (1) decreases equal to the cross-section required by the mass flow of each subsystem (7, 8, 17) connected thereto after the connection point of the subsystem (7, 8, 17), and the cross-section of the main return line (2) changes so that at the connection point of the first subsystem (7) the cross-section of the main return line (2) corresponds to the cross-section dimensioned according to the mass flow returning from the subsystem (7) and it increases at each subsystem (7, 8, 17) connected to the main return line (2) according to the return flow mass flow arriving from the subsystem (7, 8, 17), until the cross-section of the main return line (2) corresponds to the return flow of the whole system.

3. A method according to claim 1 or 2, **characterized in that** the flow rates of the main feed line (1) and the main return line (2) are adjusted so that adjustment of the mass flow of the liquid flowing through each heat-dissipating apparatus allows setting the temperature of the space heated therewith the desired set value.

4. A method according to claim 1, 2 or 3, **characterized in that** the circulating liquid is water.

5. A radiator system, comprising at least two heat-transferring subsystems (7, 8, 17) and a main feed line (1) conveying liquid thereto and a liquid main return line (2), **characterized in that**
- the inlet conduit (13) of the first heat-transferring subsystem (7) is connected to the main feed line (1) as the first one in flow direction, and the inlet conduit (9) of the second heat transferring subsystem (8) is connected to the main feed line (1) as the second one in flow direction, and the inlet conduit (13, 9, 21) of each subsequent heat transferring subsystem (7, 8, 17) is connected in a corresponding way to the main feed line (1) sequentially in flow direction,
- the return conduit (16) of the heat-transferring subsystem (7) first connected to the main feed line (1) is connected to the main return line (2) as the first one in the flow direction of the main return line (2) and the return conduit (20) of the second heat-transferring subsystem (8) is connected to the main return line (2) as the second one in the flow direction of the main return line (2) and each of the heat-transferring subsystems from first (7) to the last (17) heat-transferring subsystem is connected in a corresponding way to the main return line (2) by its return conduit (16, 20, 22) sequentially in the flow direction thereof, and
- the flow resistances of the main feed line (1) and the main return line (2) are dimensioned so that at the connection point of each heat-transferring subsystem connected thereto the sum of the mass flows of the main feed line (1) and the main return line (2) are equal.

6. A radiator system according to claim 5, **characterized in that** the cross-sections of the main feed line (1) and the main return line (2) change so that at the connection point of the first subsystem (7) the cross-section of the main feed line (1) corresponds to the cross-section required by the feed mass flow of the whole system and at the connection point of the last subsystem (17) the cross-section corresponds to that required by the last subsystem (17) and the cross-section of the main feedline (1) decreases equal to the cross-section required by the mass flow of each subsystem (7, 8, 17) connected thereto after the connection point of the subsystem (7, 8, 17), and the cross-section of the main return line (2) changes so that at the connection point of the first subsystem (7) the cross-section of the main return line (2) corresponds to the cross-section dimensioned according to the mass flow returning from the subsystem (7, 8, 17) and it increases at each subsystem (7, 8,17) connected to the main return line (2) according to the mass flow of the return flow arriving from the subsystem (7, 8, 17), until the cross-section of the main return line (2) corresponds to the return flow of the whole system.

7. A radiator system according to claim 5 or 6, **characterized in that** the liquid circulating in the radiator system is water.

8. A radiator system according to any of claims 5, 6 or 7, **characterized in that** the heat-dissipating apparatus is at least one apparatus from the group of: radiator, convection radiator, fan-assisted radiator or underfloor heating circuit.

9. A radiator system according to any of claims 5 to 8, **characterized in that** the main feed line (1) and the main return line (2) of the system are connected to a district heating heat exchanger.

10. A radiator system according to any of claims 5 to 9, **characterized in that** the system comprises a shut-off valve for disconnecting the system from the district heating heat exchanger and for connecting it to the liquid circulation of a cooling apparatus.

11. A radiator system according to any of the preceding claims 5 to 9, **characterized in that** the cooling apparatus is a cooling heat pump, such as an air-source heat pump or a geothermal heat pump.

12. A radiator system according to any of the preceding claims 5 to 11, **characterized in that** the cooling apparatus is a district cooling heat exchanger.

13. A radiator system according to any of the preceding claims 5 to 12, **characterized in that** the cooling heat pump is connected to a heat accumulator for recovering heat therefrom.

14. A radiator system according to claim 13, **characterized in that** the heat accumulator is connected to at least one apparatus from the group of: solar accumulator, air-source heat pump, geothermal heat pump, water-source heat pump, boiler, electric boiler, waste heat heat exchanger.

15. A radiator system according to claim 13 or 14, **characterized in that** the hot water heat exchanger of the building is connected to the heat accumulator.

16. A radiator system according to any of the preceding claims 5 to 15, **characterized in that** the inlet or return conduit of at least one heat-dissipating apparatus comprises a shut-off valve for disconnecting this heat-dissipating apparatus from the liquid feed line.
